(19)

Europäisches
Patentamt
European
Patent Office
Office européen
des brevets

(11) **EP 3 567 340 A1**

(12) **EUROPEAN PATENT APPLICATION**

(43) Date of publication:
**13.11.2019 Bulletin 2019/46**

(51) Int Cl.:
***G01B 11/25*** (2006.01)　　　*G01B 11/00* (2006.01)

(21) Application number: **18171466.8**

(22) Date of filing: **09.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Gamesa Renewable Energy A/S**
**7330 Brande (DK)**

(72) Inventors:
• **Bach, Heine**
  **9210 Aalborg (DK)**
• **Lyngby, Rasmus Ahrenkiel**
  **3000 Helsingør (DK)**
• **Nielsen, Ewa**
  **9000 Aalborg (DK)**

(74) Representative: **Aspacher, Karl-Georg**
**Siemens Gamesa Renewable Energy GmbH & Co. KG**
**Otto-Hahn-Ring 6**
**81739 München (DE)**

(54) **VISUAL INSPECTION ARRANGEMENT**

(57)　The invention describes a visual inspection arrangement (1) comprising a robot assembly (10) realised to move in an unconstrained manner relative to an object (2) being subject to visual inspection, which robot assembly (10) comprises a robot arm (100) with an end effector (101) realised to direct an imaging assembly (11) at the object (2); a drive arrangement (12) realised to effect a displacement of the robot assembly (10); a positioning system (13) configured to track the position (13_XYZ, 13_RxRyRz) of the imaging assembly (11) relative to the object (2); and a control unit (14) configured to control the drive arrangement (12) on the basis of the tracked position of the imaging assembly (11). The invention further describes a method of performing a visual inspection of an object (2).

FIG 1

EP 3 567 340 A1

## Description

The invention describes a visual inspection arrangement, and a method of performing a visual inspection of an object.

In keeping with advances in the field of renewable energies, larger wind turbines are being designed and constructed, with rated power output in the region of several megawatts. Generally, this is made possible by the use of longer rotor blades that turn an outer rotor of a permanent magnet generator. Rotor blade lengths in excess of 50 m are no longer the exception. To achieve a resilient but also relatively light structure, a wind turbine rotor blade is generally moulded in a composite layup procedure. The established geometry of a rotor blade comprises an essentially circular root end for mounting to the hub, and a gradually tapering airfoil shape over the remaining length of the blade, terminating in a narrow and flat tip end.

Defects in the rotor blade can be introduced at various stages during the blade manufacturing process, and can significantly detract from the wind turbine performance and from the rotor blade lifetime. For example, irregularities at the surface can lead to erosion and increased drag. Therefore, it is very important to inspect the quality of the blade's surface before it leaves the production site, such that any significant errors can be traced to their origin in the production process so that the cause of the problem can be eliminated.

The size of a defect can go from macro (with a size of 1 metre or more) to micro (with a size of only a few micrometres), and it is difficult to provide a testing procedure that is capable of detecting all kinds of defect to the same level of accuracy. There are various prior art testing methods, each of which is generally suited to detecting defects within a certain size range. For example, a gauge template can be used to detect deviations from the design geometry, i.e. macro-scale defects, following Taylor's measurement principle. However, this approach can be problematic owing to the complex shape of modern rotor blades. To counteract an undesirable bending of a long rotor blade during operation, the rotor blade usually does not have a straight longitudinal or chordwise axis, and instead the chordwise axis may follow a gentle curve. The airfoil part of the blade therefore "twists" to a certain extent about the chordwise axis. It is important that the shape of the finished rotor blade meets any such design requirement.

A visual inspection using a flashlight is carried out in order to detect small-scale defects such as small cracks or pits in the outer surface of the rotor blade. However, this kind of inspection technique is time-consuming and requires trained personnel, since small-scale defects can be difficult to detect.

Another technique makes use of a manually operated, laser-based coordinate measuring machine (CMM). In such an approach, a stationary laser tracker is used to track and continuously measure the position of a probe that is moved over the blade surface by an operator. This creates a set of profile curves which are sampled sparsely over the surface. Another laser-based system is based on stationary Lidar and does not require a probe to measure the profile curves. In these measurement procedures, the laser system must be repositioned and re-calibrated multiple times in order to cover the entire length of the blade. This makes the acquisition process slow and therefore also expensive. Furthermore, these methods result in profile curves that are separated by relatively large distances, so that they are not suitable for detecting small-scale defects and micro-defects. The need to re-position the laser system may be avoided by deploying a rail-mounted laser system. However, the rails must generally be fixed to the ground and therefore greatly limit the flexibility of the system. Within the constraints of a rail-based system, it is generally not possible to cover the entire surface of a curved rotor blade. Furthermore, since the rails are a permanent fixture, any rotor blade to be tested must be moved to that location, further adding to the overall cost of manufacture.

It is therefore an object of the invention to provide an improved way of inspecting a wind turbine rotor blade.

This object is achieved by the visual inspection arrangement of claim 1, and by the method of claim 12 of performing a visual inspection of an object.

According to the invention, the visual inspection arrangement comprises an imaging assembly, and a robot assembly realised to move in an unconstrained manner - i.e. freely - alongside an object being subject to visual inspection. In the context of the invention, the term "unconstrained" is to be understood to mean that the robot assembly is not constrained by fixed elements such as rails or tracks, but can move freely and in any direction relative to the object being inspected. The robot assembly comprises a robot arm with an end effector to which the imaging assembly is mounted. The robot assembly is realised to direct the imaging assembly at the object. The visual inspection arrangement further comprises a drive arrangement realised to effect a displacement of the robot assembly; a positioning system configured to track the position of the imaging assembly relative to the object; and a controller configured to control the drive arrangement. The controller generates control signals for the drive arrangement, and these control signals are preferably generated on the basis of the measured geometry of the object. The geometry of the object is determined using data collected by the imaging assembly and also using data provided by the positioning system. The controller is therefore configured to control the drive arrangement on the basis of the tracked position of the imaging assembly and the geometry of the object.

The imaging assembly may be assumed to be held by the robot arm end effector in such a way that an imaging device of the imaging assembly can be pointed at the surface of the object undergoing inspection. A robot arm can be realised so that its end effector can be moved with six degrees of freedom. The end effector can be moved relative to mutually orthogonal X, Y and Z axes in a local reference frame in three-dimensional space. Its orientation can comprise roll, pitch and yaw about those X, Y and Z axes. The position of the end effector and therefore also the imaging assembly can therefore be expressed using three components of translation (the XYZ position) and three components of rotation (the RxRyRz position), giving a total of six degrees of freedom. The three components of translation can be described as forward/back (along a local X axis), left/right (along a local Y axis) and up/down (along a local Z axis). The three components of rotation can be described as roll (about the local X axis), yaw (about the local Y axis) and pitch (about the local Z axis). Roll, pitch and yaw can be determined using any suitable arrangement of sensors, for example a sensor arrangement of the robot assembly that is used to track the RxRyRz position of the end effector. These six degrees of freedom can be achieved by constructing the robot arm with an appropriate arrangement of joints and actuators, as will be known to the skilled person. Such robot arms are known in the field of automated precision manufacturing, for example. A desired level of precision can be achieved by realising the robot arm so that its motion is smooth and controlled. In the context of the invention, the position of the imaging assembly relative to the object shall be understood to comprise a complete or unique XYZ and RxRyRz position definition in that local reference frame.

An advantage of the inventive visual inspection arrangement is that it is not constrained in any way, unlike the known prior art systems that use a system of rails to support an imaging assembly. Furthermore, the visual inspection arrangement can perform a complete visual inspection of an object without any user intervention, unlike in some known prior art systems that require relocation of an imaging assembly from one side of the object to the other. An advantage of the inventive visual inspection arrangement is that the drive arrangement effects a displacement of the robot assembly on the basis of the determined position of the imaging assembly, without any need for manual intervention. In other words, information regarding the position of the imaging assembly relative to the object undergoing inspection is used as a basis to determine the future position of the imaging assembly. The inventive visual inspection arrangement may therefore be regarded as a self-driving or autonomous visual inspection arrangement. Another advantage is that the inventive visual inspection arrangement does not require any alterations to the production facility. All that may be required is a relatively flat floor. If the underside of the object is also to be inspected, the visual inspection arrangement should also be given unobstructed passage below the object. The autonomous nature of the inventive visual inspection arrangement can therefore lead to a significant reduction in the overall manufacturing costs.

According to the invention, the method of performing a visual inspection of an object uses an embodiment of the inventive visual inspection arrangement. The method comprises the steps of moving the robot assembly to a working position and then scanning the surface portion of the object accessible from within the work envelope of the robot assembly at that working position (step S1), while tracking the position of the imaging assembly; computing the next working position for the robot assembly (step S2) on the basis of the just scanned surface portion and/or the tracked position of the imaging assembly; effecting a displacement of the robot assembly to that working position (step S3); and repeating steps S1 - S3 to scan the area of interest. The "area of interest" might be the entire surface area of the object or only a portion of the object's surface. The term "work envelope" is known from the field of robotics and refers in this case to the volume defined by the reaching space of the robot arm. The size of the work envelope will depend on the length of the robot arm, the number and type of joints in the robot arm, etc.

An advantage of the inventive method is that it can be easily implemented in any production facility. As mentioned above, there is no need to make any alterations to the production facility, or to provide a dedicated area in which to carry out the inventive method. All that is required is a relatively flat floor, and preferably also sufficient clearance underneath the object. The inventive method provides a way of performing a quick and thorough visual inspection of an area of interest without any user intervention, since there is no need to manually relocate elements of the visual inspection arrangement at any stage during the procedure.

The invention also describes a computer program product comprising a computer program that is directly loadable into a memory of the control unit of an embodiment of the visual inspection arrangement, and which comprises program elements for performing steps of the inventive method when the computer program is executed by the control unit of the visual inspection arrangement.

Particularly advantageous embodiments and features of the invention are given by the dependent claims, as revealed in the following description. Features of different claim categories may be combined as appropriate to give further embodiments not described herein.

The inventive visual inspection arrangement can be used to perform a visual inspection of any kind of object. Because of its flexibility and adaptability, the inventive visual inspection arrangement is particularly suited to the visual inspection of objects with irregular or complex surfaces. In the following, without restricting the invention in any way, it may be assumed that the object undergoing visual inspection is the rotor blade of a wind turbine. A wind turbine rotor blade can be very long (lengths in excess of 50 m are no longer the exception) and generally comprises several differently shaped regions. Typically, a wind turbine rotor blade commences at an essentially cylindrical root end which transitions to an airfoil shape that extends over most of the blade length and terminates in a thin and narrow tip. The cylindrical root end can be up to several metres in length. The longest chord of the airfoil portion of the rotor blade is generally found in the transition region, and the chord decreases steadily in the direction of the tip. The blade thickness also decreases steadily in the direction of the tip. For reasons of energy efficiency, acoustic optimisation, etc., the rotor blade of a large wind turbine will also generally be shaped to exhibit some degree of flex or twist. The overall shape of a wind turbine rotor blade is therefore complex. However, as mentioned above, it is necessary to completely and thoroughly examine the rotor blade in order to detect defects and also to determine whether the measured geometry of the rotor blade matches the intended geometry. Such a complete and thorough inspection can be carried out in a quick and efficient manner using the inventive method.

In a particularly preferred embodiment of the invention, the positioning system comprises a stationary laser tracker arranged in the vicinity of the object, and one or more retro-reflective targets. For example, the laser tracker can be mounted on a suitably stable support that can be placed near the rotor blade tip end in such a way that it can "see" a retro-reflective target at all times. A retro-reflective target can be realised as a passive or active retroreflector, for example. A passive retro-reflective target simply reflects the laser beam. If passive retro-reflectors are used as targets, it is necessary to track several targets, and the laser tracker must shift between targets. Following each shift, the laser tracker must locate the next target, so that the procedure is relatively time-consuming. Therefore, in a preferred embodiment of the invention, the retro-reflective target is an active target carried by the end effector. An active retro-reflective target also includes electronics and/or sensors that can provide RxRyRz information, for example. In such a preferred embodiment, the imaging assembly and the active target are both carried by the end effector and therefore move as one entity. In a calibration step, the position of the imaging assembly can be determined relative to the active target.

Preferably, the laser tracker is configured to generate position data describing the XYZ position of the imaging assembly in a local reference frame, and the active target is configured to generate position data describing the RxRyRz position of the imaging assembly in the local reference frame. In one embodiment, the laser tracker comprises a laser source for generating a laser beam, and the laser source is rotatable within a relatively large range. The laser tracker is realised to aim the laser beam in the direction of the active target and receives the reflected laser beam, from which it can compute the XYZ position of the active target. From this information and the calibration data, it is possible to compute the XYZ position of the imaging assembly.

Being mounted on the end effector, the active target is movable in six degrees of freedom. Preferably, the active target is equipped with a sensor assembly such as an angular encoder arrangement so that it can determine its RxRyRz orientation. From this information, it is possible to compute the RxRyRz position of the imaging assembly. On the basis of the XYZ position information and RxRyRz position information, the control unit can track the movements of the imaging assembly and compute a next position for the imaging assembly, as well as any appropriate control signals for one or more actuators of the visual inspection arrangement in order to move the imaging assembly to the next position. With such a laser-based positioning system, an unobstructed view between the active target and the laser tracker is only required in a relatively narrow field.

As explained above, the laser tracker can "follow" or track the active target. In a preferred embodiment of the invention, the laser tracker is realised to compute the position of the active target in spherical coordinates. To this end, the distance r to the active target is calculated based on the time it takes for the light to hit the active target and return to the laser tracker, and the elevation angle $\theta$ and azimuth angle $\varphi$ are measured (for example using data provided by angular encoders mounted on mechanical axes of the moveable laser source). The spherical coordinates can be converted to Cartesian coordinates by the equations

$$X = r \sin\theta \cos\varphi$$

$$Y = r \sin\theta \sin\varphi$$

$$Z = r \cos\theta$$

to obtain the XYZ position of the active target (and therefore also the XYZ position of the imaging assembly). The $R_X R_Y R_Z$ position of the active target (and therefore also the $R_X R_Y R_Z$ position of the imaging assembly) can be computed using information from motion sensors arranged in a housing of the active target, for example, or from sensors mounted on the end effector or elsewhere on the robot assembly.

In a further preferred embodiment of the invention, elements of the visual inspection arrangement can communication in a wireless manner. For example, the active target and laser tracker can be equipped with a means to communicate over a wireless local area network. In such an embodiment, the active target can send RxRyRz position information to the laser tracker, and the laser tracker can transmit the complete XYZ and RxRyRz position information of the imaging assembly to the control unit, which can use this information to generate control signals for one or more actuators in order to move the imaging assembly to its next position.

Any suitable kind of imaging assembly may be used to scan the surface of the object under inspection.

In a preferred embodiment of the invention, the imaging assembly may be realised as a geometrical measurement device such as an area-sampling 3D scanner. Examples of such devices are a structured light scanner, a moving laser scanner, a time-of-flight scanner, etc. The imaging assembly may be realised to generate photographic images or contour images of the object's surface. Alternatively, image data collected by such a device may be a point cloud. The image data returned by the imaging assembly is processed by a controller and used in a feedback loop to autonomously plan and control the future movement of the platform. For example, the controller or control unit may analyse the images to determine whether a surface region of the object has been sufficiently covered before moving on to the next surface region. Neighbouring and/or overlapping images can be "stitched" using any suitable stitching technique as will be known to the skilled person.

Stitching of neighbouring scans ("sub-scans") is generally performing by aligning measured points of neighbouring scans. The sub-scans are ordered in the common reference frame using the tracked position of the imaging assembly, i.e. using the XYZ and RxRyRz position information provided by the positioning system. Since the local geometry of wind turbine blades is very monotonous (i.e. there is little change), prior art techniques of visual inspection have difficulty in unambiguously identifying the correct alignment positions for two neighbouring scans. The inventive visual inspection arrangement with its positioning system as described above can accurately track the position of the imaging assembly relative to the object being inspected, thereby providing all necessary information for accurate and rapid image stitching, since the relative positions of neighbouring scans can be accurately established. The positioning system therefore provides precise information that can be used to stitch the sub-scans together to a much higher level of accuracy than would otherwise be possible using only the scan data.

In a preferred embodiment of the invention, the alignment of neighbouring scans is enhanced by a suitable algorithm, for example an iterative closest point (ICP) algorithm. Preferably, the uncertainty of the position should be lower than half of the minimum point-to-point distance. This distance is scanner dependant, and as such is not a limiting property of the system. For example, this distance can be in the order of 200 $\mu$m.

The robot arm could be arranged on a body with "robot legs" so that it can "walk" alongside the object undergoing visual inspection. However, in a more straightforward and economical realisation, the robot assembly comprises a mobile base frame realised to support the robot arm and to move in an entirely unconstrained manner alongside the object being subject to visual inspection. The mobile base frame can be realised as a horizontal or flat frame close to floor level, equipped with wheel pairs so that it can move along the ground.

In one preferred embodiment of the invention, the mobile base frame is equipped with two wheel pairs, and the drive arrangement comprises an electric motor assembly to drive one of these wheel pairs. The other two wheels can be non-driven wheels or follow-wheels. In an alternative embodiment, a mobile base frame of a holonomic robot assembly can be equipped with omniwheels. Any of these embodiments ensures that the mobile base frame can move forward and back, and also from side to side. Since the mobile base frame carries the robot arm, it already contributes two degrees of freedom to the robot arm end effector.

As mentioned above, a wind turbine rotor blade can be very large. When supported on a factory floor, the upper surface of the rotor blade may be several metres above floor level. The required vertical movement range may be obtained by choosing a suitably long robot arm, i.e. a robot arm with two or more suitably long sections. Such a robot arm can reach to the necessary height, but will have a corresponding large work envelope and may be cumbersome to manipulate.

Furthermore, it can be difficult for such a robot arm to reach underneath the rotor blade. Therefore, to obtain a desired vertical movement range, the inventive visual inspection arrangement preferably comprises a vertical elevator support mounted on the mobile base frame, and a mounting interface of the robot arm is secured to a vertical elevator or platform mounted to the vertical elevator support. In this way, the mobile base frame contributes three degrees of freedom to the robot arm end effector. The vertical elevator support can be realised as a linear drive, with a motor that can be controlled to effect a desired vertical displacement of the platform (and therefore also the robot arm). In this way, a satisfactory work envelope can be obtained for a compact robot arm constructed from favourably short sections. The drive arrangement shall be understood to also comprise any motor(s) or actuator(s) of the vertical elevator support.

As indicated above, it may also be desirable or necessary to inspect the underside or under surface of the object. To this end, the imaging assembly must be manoeuvred in some way underneath the object. One way of doing this would be to use long robot arm sections, as indicated above, and to move the mobile base frame sufficiently far back from the object so that the long arm sections can be manipulated to move them under the object. However, this realisation can be unstable as well as being expensive to realise. Therefore, in a preferred embodiment of the invention, the mobile base frame is constructed to have an aperture that can accommodate at least a portion of the robot arm. In this way, an elbow of the robot arm can be lowered to almost floor level and can sweep closely over the floor. This manoeuvrability of the robot arm allows the end-effector of the robot to move underneath the object. One way of achieving such an aperture might be to construct the mobile base frame as an open rectangular frame, or as a C-shaped frame, so that an elbow of the robot arm can be lowered into the aperture or empty space formed by the frame.

Any suitable kind of positioning system can be used as an alternative to the laser-based system described above. For example, an existing indoor positioning system might be used. In such an embodiment, a tracking device can be mounted on the end effector, and can be any device that is able to communicate with one or more anchor nodes or satellites arranged about the object undergoing inspection. For example, anchor nodes can be realised as wireless access points, and the tracker can communicate with these anchor nodes so that, by triangulation, the position of the imaging assembly in the reference frame can be unambiguously established.

The skilled person will be familiar with the various possibilities and may consider the use of any of several available wireless, acoustic or optical positioning systems. In most indoor positioning system, a minimum of four "satellites" may be attached to the ceiling, and the tracking device is a suitable transmitter mounted on the imaging assembly. In a wireless system, the transmitter emits a radio signal which is received by the satellites, and the time delays between the signals can be used to compute the position of the imaging assembly. In an audio positioning system, the principle is the same, but the tracking device emits an audio signal instead of radio. The XYZ position information can be obtained from just one transmitter, but at least three transmitters are needed to establish a local reference frame and thereby the orientation or rotation information $R_X R_Y R_Z$. In these satellite-based realisations, a disadvantage is that the satellites are generally permanently installed (on the ceiling), placing a constraint on the location of the visual inspection arrangement and necessitating permanent alterations to the production environment. In addition, the satellites must be evenly distributed around the object being inspected in order to avoid large uncertainties arising during extrapolation, and the space between transmitter and satellites must be free of any obstruction. If the satellites are moved for any reason, recalibration of the visual inspection arrangement is necessary.

Preferably, the inventive visual inspection arrangement is realised for the visual inspection of a large wind turbine rotor blade. To this end, the robot assembly is preferably realised as a multiple-jointed robot arm, and is mounted to a mobile base frame that preferably has a weight of at least 250 kg, more preferably 500 kg to support the robot arm. Preferably the mobile base frame has a footprint of at least 2.5 m², more preferably at least 3 m². When the mobile base frame is realised as a flat and low structure, its large footprint does not in any way restrict the motion of the robot arm.

To initiate a scan procedure, the robot assembly is placed in a suitable initial working position, for example any position from which the robot arm can direct the imaging assembly at the surface of the object in order to generate a useful image. With the robot assembly at this initial position, the controller actuates the robot arm to move the imaging assembly (step S1) while scanning the surface that is accessible from within the work envelope of the robot assembly at that working position. Preferably therefore, this step S1 comprises the steps of positioning the imaging assembly in a sampling position to direct it at the object (step S1.1), generating image data for that sampling position (step S1.2) and then moving the imaging assembly to a subsequent sampling position S1.3. These steps are repeated to scan the surface portion that is accessible from within that work envelope. The "sampling position" shall be understood to be the uniquely defined position of the imaging assembly in the local reference frame. A sampling position can be defined as a set of coordinates in the reference frame, for example. A subsequent sampling position will result in the position and/or orientation of the imaging assembly being offset in one or more directions. Preferably, the density of the sampling positions is adapted to the shape of the object's surface. For example, sampling positions may be spaced close together when the shape of the object is complex or irregular, and may be spaced further apart when the shape of the object is relatively flat or only slightly curved.

The data generated at each scan position therefore comprises image information as well as position information provided by the tracker.

After complete coverage of the surface accessible from within a specific work envelope, the next working position for the robot assembly is computed in step S2. The next working position can be defined as one or more sets of coordinates in the reference frame, for example. Alternatively, the next working position can be formulated as a set of relative displacements (e.g. move x cm along X-axis, move y mm along Y-axis, etc.). Preferably, the next working position defines the next position of the mobile base frame and also the next position of the imaging assembly. On the basis of this information, the control unit generates control commands for the various elements of the drive arrangement in order to effect the corresponding displacement of the robot assembly to the next working position (step S3).

Steps S1 - S3 are repeated until the entire area of interest has been scanned.

Depending on the depth-of-field of the scanner, the visual inspection could be carried out in a two-tier approach, i.e. scanning at a first distance from the blade to map its geometry and to determine whether the blade has the correct overall shape, and then scanning from a second distance (closer to the surface) to detect small-scale surface defects.

Other objects and features of the present invention will become apparent from the following detailed descriptions considered in conjunction with the accompanying drawings. It is to be understood, however, that the drawings are designed solely for the purposes of illustration and not as a definition of the limits of the invention.

Fig 1 shows a side view of an embodiment of the inventive visual inspection arrangement;

Fig 2 shows a plan view of the visual inspection arrangement shown in Fig 1;

Fig 3 shows a side view of the visual inspection arrangement shown in Fig 1 and Fig 2;

Fig 4 shows a further side view of an embodiment of the inventive visual inspection arrangement;

Fig 5 is a flowchart showing the steps in an exemplary embodiment of the inventive method;

Fig 6 shows a computation unit of an embodiment of the inventive visual inspection arrangement;

Fig 7 is a schematic representation of a drive arrangement for an embodiment of the inventive visual inspection arrangement;

Fig 8 shows elements of a positioning system used in an embodiment of the inventive visual inspection arrangement.

In the diagrams, like numbers refer to like objects throughout. Objects in the diagrams are not necessarily drawn to scale.

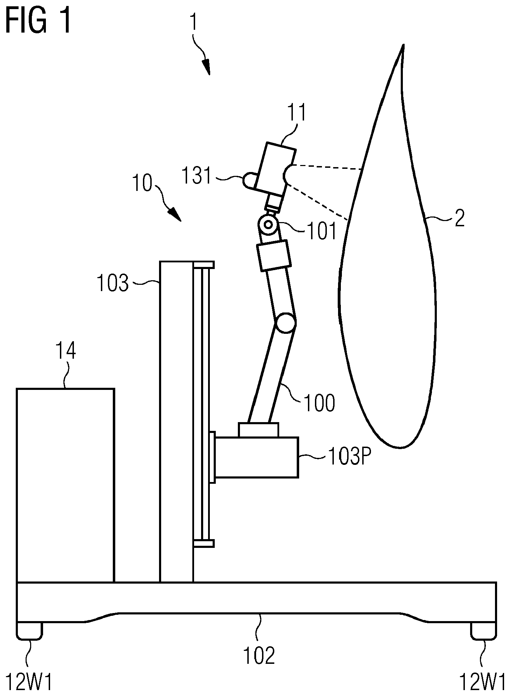

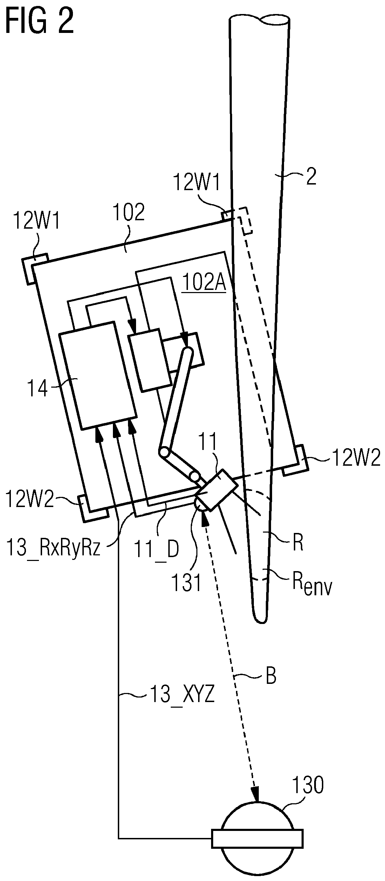

Fig 1 shows a side view of an embodiment of the inventive visual inspection arrangement 1, and Fig 2 shows a plan view of the setup. The diagrams show a robot assembly 10 supported on a platform 103P of a vertical elevator support 103, which in turn is mounted on a mobile base frame 102. The robot assembly 10 is shown relative to the airfoil portion of a wind turbine rotor blade 2, which is held in position so that the trailing edge is pointing upward, and the leading edge faces the floor. As indicated in the diagrams, the rotor blade is supported so that there is some clearance between the leading edge and floor level to permit a visual inspection of the leading edge.

The image scanner 11 may be any suitable type of scanner. Preferably, the image scanner 11 is an area-sampling 3D scanner with a suitably fine resolution, for example at least 250 $\mu$m between points (25 points per square mm), and an uncertainty which is less than one third of the minimum point-to-point distance, in this case maximum 83.3 $\mu$m. This resolution and precision is sufficient to detect very small structures such as the height of the transition from the blade's outer surface to a protective layer applied about the leading edge.

The image scanner 11 can therefore be used to detect small-scale surface defects and also to map the overall geometrical shape of the blade. Of course, a higher resolution can be achieved by using a camera with a higher resolution or a smaller field of view. In this way, it is possible to measure structures that have a size in the region of only 100 $\mu$m.

The mobile base frame 102 is equipped with two wheel pairs.

A control unit 14 supported by the mobile base frame 102 is configured to control a drive unit or actuator that turns one wheel pair 12W1, and the other wheel pair simply follows. The robot assembly 10 comprises a robot arm 100 that has a number of jointed sections, and which terminates in an end effector 101 that holds an image scanner 11. In this exemplary embodiment, the robot arm 10 is realised to displace the end effector 101 along its local X, Y and Z axes, and to rotate the end effector 101 about these axes, so that the end effector 101 (and therefore also the image scanner 11) has six degrees of freedom. These degrees of freedom are obtained by constructing the robot assembly 100 using suitable actuators. The control unit 14 is configured to control the actuators of the robot arm 100 and end effector 101. Translation movement of the end effector 101 in X, Y and Z axes can also be achieved by the driven wheel pair 12W1 of the mobile base frame 102 and the vertically moveable platform 103P. These components of the visual inspection arrangement 1 can be used for a "rough" positioning of the end effector 101, and the actuators of the robot assembly 100 are then controlled to achieve a "fine" positioning of the end effector 101. The control unit 14 therefore always knows the XYZ position and the $R_XR_YR_Z$ position of the end effector 101 and imaging assembly 11.

As mentioned above, the surface of the rotor blade 2 can be locally monotonous, so that there does not appear to be any difference between adjacent images of the surface. However, the images must be stitched to a sufficiently accurate degree in order to determine the overall shape of the rotor blade. This is done by using a positioning system to continually determine the position of the imaging assembly 11 relative to the rotor blade 2 within a reference frame. There are various types of positioning system that may be used for this purpose. In this exemplary embodiment, a laser-based positioning system is used, and a laser tracker 130 (shown in Fig 2) is positioned near the tip of the blade 2. An active retro-reflective target 131 is mounted onto the image scanner 11 so that the active target 131 and image scanner 11 move as one entity. The laser tracker 130 emits a laser beam B that is reflected by the active retro-reflective target. The laser tracker 130 is configured to continually measure the distance to the target 131. Initially, the position of the imaging assembly 11 relative to the active target 130 is known from a previous calibration procedure. The stationary laser tracker 130 remains in place for the duration of the inspection procedure. The features of this type of positioning system will be known to the skilled person. The assembly comprising the image sensor, gyroscope and laser tracker can be an off-the-shelf device such as the vProbe from Automated Precision Inc., as will be known to the skilled person.

Fig 2 shows the airfoil portion of the wind turbine rotor blade 2, the laser tracker 130 arranged near the tip end of the blade 2, and the retro-reflective active target 131. The mobile base frame 102 has been moved sufficiently close to the side of the rotor blade 2, using the driven wheel pair 12W1, so that the robot assembly 100 can then be actuated to collect images of the rotor blade surface area in an image region R. The laser tracker 130 emits a laser beam B that is reflected by the active target 131, so that the XYZ position of the imaging assembly 11 can be determined. Using a sensor arrangement configured to track the $R_XR_YR_Z$ rotation of the imaging assembly 11, the $R_XR_YR_Z$ position of the imaging assembly 11 can be determined. Using this information 13_XYZ, 13_$R_XR_YR_Z$, the control unit 14 controls any actuators of the robot assembly 100 so that the end effector 101 moves the imaging assembly 11 until it has captured (preferably overlapping) images of all sub-regions R within the accessible region $R_{env}$. As explained above, the images are stitched using a suitable stitching algorithm that is fed with image data 11 D as well as position data 13_XYZ, 13_$R_XR_YR_Z$ of the imaging assembly 11.

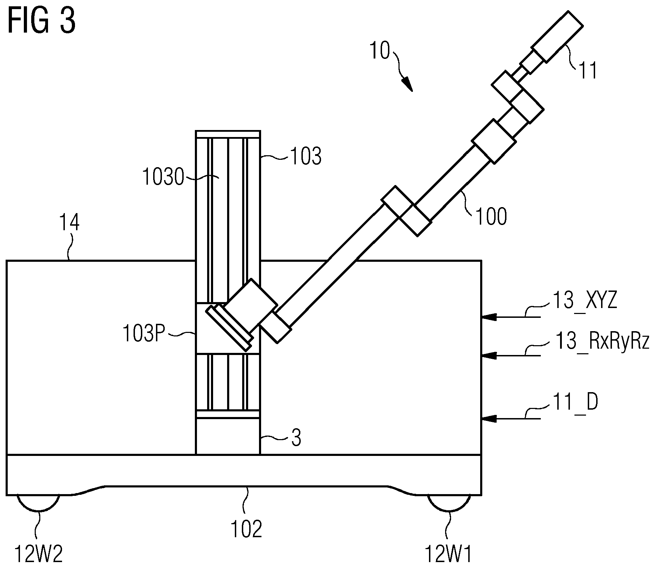

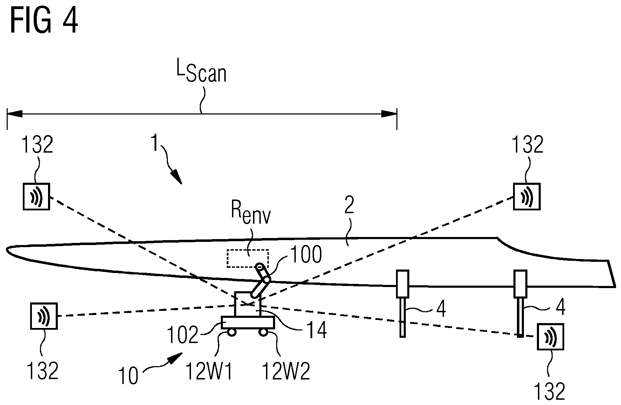

Fig 3 shows a side view of the assembly described in Fig 1 and Fig 2 above. In this embodiment, the robot assembly 10 is realised so that the platform 103P (to which the robot arm 100 is mounted) can also be tilted from side to side, thereby also contributing to the rotation component of the imaging assembly 11. As mentioned above, the platform 103P can be raised and lowered, in this case along a vertical spindle axis 1030, thereby contributing to the translational Z-axis displacement of the imaging assembly 11. The control unit 14 is configured to control any actuator(s) used to achieve these displacements and to record the relevant position data. Fig 4 illustrates an alternative embodiment of the inventive visual inspection arrangement 1. Here, the positioning system 13 makes use of an indoor positioning system, with a number of stationary ceiling-mounted targets 132 and a means of communicating with these in a wireless manner in order to determine the XYZ position of the imaging assembly. As explained above, the RxRyRz position of the imaging assembly can be determined by evaluating information provided by sensors of the robot assembly, for example transducers, gyroscopes, charge-coupled devices etc.

The robot assembly 10 is being used to inspect a rotor blade 2 over a specific length $L_{scan}$ of its airfoil portion. This is the region of most interest, since most of the lift is generated in this blade region and defects present over this length $L_{scan}$ are most critical to the performance of the rotor blade 2. Any reference to the "complete object" or "entire object" scanned by the visual inspection arrangement 1 shall be understood to refer to the region of interest that is scanned, since any other part of the object may be considered to be irrelevant. Here, the "entire object" is the outer end of the rotor blade, i.e. the airfoil tip portion of the blade.

The diagram indicates a support 4 for the rotor blade 2 near the root end of the blade 2. The root end is unimportant aerodynamically and need not be scanned. The scan sequence can commence on one side of the rotor blade 2 close to the support 4, proceeding along the rotor blade 2 and around the tip end, back to the support 4 on the other side. In this way, the entire region of interest (the airfoil portion over length $L_{scan}$) can be imaged in a single uninterrupted scan sequence.

Alternatively, if the blade must be supported at some point along the region of interest, the visual inspection arrangement 1 can be equipped with a laser range scanner which informs the control unit 14 when the distance to the support drops below a threshold, and the mobile base frame 102 can then be manually moved around the obstacle (or automatically if the location and dimensions of the obstacle are known), so that the scan sequence may resume.

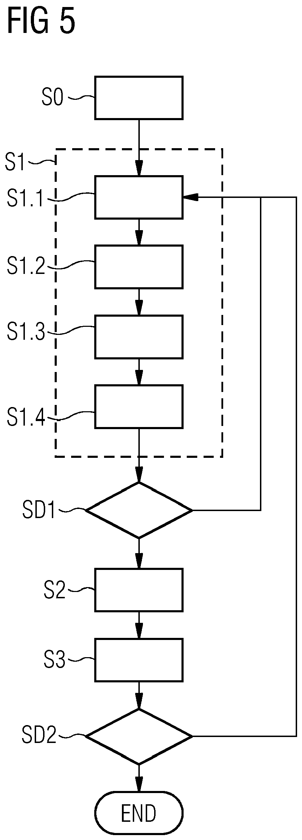

Fig 5 is a flowchart showing the steps in an exemplary embodiment of the inventive method. To perform a visual inspection of an object such as a wind turbine rotor blade or any large, complex object, a robot assembly of the inventive visual inspection arrangement is moved in step S0 to an initial working position, and the positioning system is activated. In step S1 the accessible surface portion of the object is scanned, i.e. the imaging assembly captures image data of the surface that is visible to the imaging assembly from within the current work envelope of the robot assembly. The positioning system is continually tracking the position of the active target, which essentially provides the position in space of the imaging assembly through careful calibration. This step S1 comprises several sub-steps, which may be summarized as follows: the imaging assembly is arranged in step S1.1 in a scan position, and the imaging assembly is directed at the surface of the object. In step S1.2, image data is acquired or captured at that scan position. In step S1.3, the next scan position for the imaging assembly is computed on the basis of the position data being continually provided by the positioning system. In step S1.4, the imaging assembly is moved to that next scan position. These steps S1.1 to S1.4 are repeated as often as necessary to scan the surface portion that is accessible from within the current work envelope of the robot assembly. Here, the decision whether or not steps S1.1 to S1.4 should be repeated is made in step SD1.

In step S2, the next working position for the robot assembly is computed on the basis of the position data being provided by the positioning system. In step S3, the robot assembly is moved to that next working position. These steps S1 to S3 are repeated as often as necessary in order to scan the entire surface of the object. The decision whether or not steps S1 to S3 should be repeated is made in step SD2. When the complete object has been imaged, the method terminates.

The aim of the imaging procedure is to completely map the surface of the object. Depending on the imaging assembly used, the result of the imaging procedure may be a virtual 3D image of the object. This can be achieved by stitching the image data to obtain an image of the complete object. Image stitching can be done at any appropriate stage, for example following step S1.4, preceding step S2, etc.

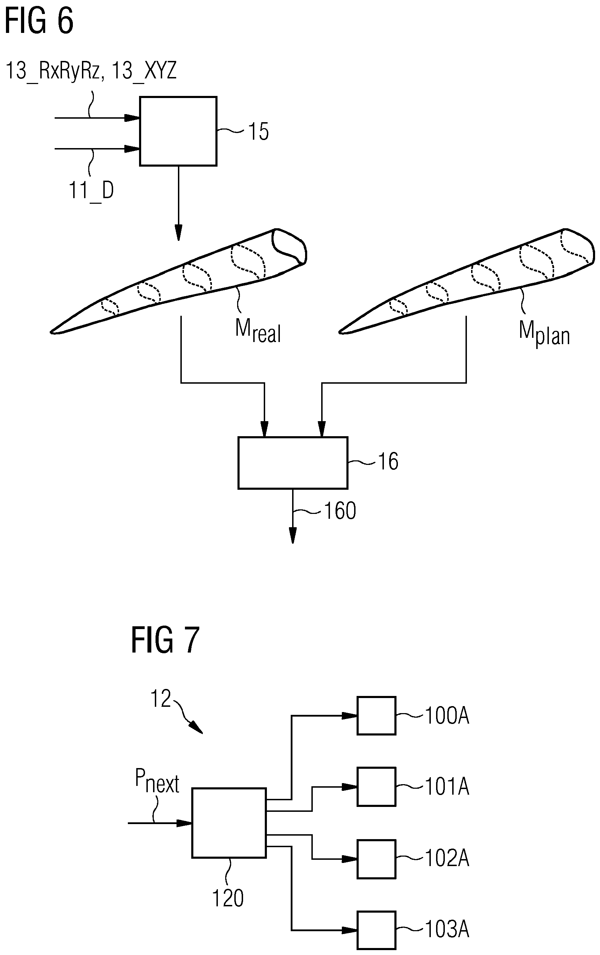

By using an imaging assembly with a suitably high resolution and precision, surface defects as small as a few micrometres may be visible in the final computed shape, and any departure from the intended geometry of the object may be detected to an accuracy of a few micrometres. Since the visual inspection arrangement can result in a 3D image of the entire object, macro-defects can also be accurately detected. This is illustrated in Fig 6, which shows a computation unit 15 that computes images on the basis of the image data 11_D captured by the imaging assembly and position data 13 D provided by the tracker, and stitches the images to generate a geometrical model $M_{real}$ of the entire object. To assess the quality of the manufacturing process, the computed shape $M_{real}$ of the manufactured object is compared to the intended shape $M_{plan}$ of the object. Deviations from the intended shape $M_{plan}$ are detected in an analysis unit 16. The analysis unit 16 can also examine the computed shape $M_{real}$ of the manufactured object to detect any surface defects, as explained above. Information regarding the locations and dimensions of defects or manufacturing faults may be provided in the form of a suitable output 160.

Fig 7 illustrates a drive arrangement 12 for an embodiment of the inventive visual inspection arrangement 1. Here, a control signal computation unit 120 receives position data $P_{next}$ specifying the next position of the image scanner 11.

For example, after completely scanning the accessible surface from one working position, the control unit may want to move the image scanner 10 cm to the left and 20 cm downwards. Depending on the current position and orientation of the end effector and the current position of the mobile base frame, which may be assumed to be known to the drive arrangement 12, the control signal generator 120 can then generate suitable control signals for any actuators 100A of the robot arm and/or for any actuators 101A of the end effector and/or for any actuators 102A of the mobile base frame and/or for any actuators 103A of the vertical support. A suitable combination of such control signals can displace the end effector in the desired manner as made possible by its six degrees of freedom.

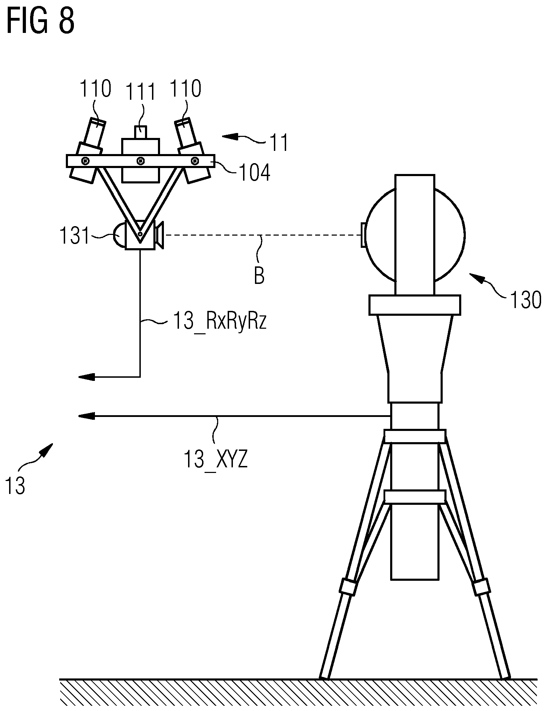

Fig 8 illustrates the operating principle of the preferred positioning system 13. The diagram shows a laser tracker 130 and an active target 131. The robot assembly is not shown, but may be assumed to be present, with its end effector arranged to hold an imaging assembly 11. Here, the imaging assembly 11 comprises two cameras 110 and a projector 111, and these are mounted to a holding frame 104 which may be assumed to be secured to the end effector of the robot arm, so that the imaging assembly 11 and the active target 131 can be moved as one entity. From a calibration step, the position of the imaging assembly 11 is known relative to the active target 131. The laser tracker 130 aims a laser beam B in the direction of the active target 131. The laser source is moveable within a relatively large range, and the active target 131 is also movable in six degrees of freedom as explained above. Here, the laser tracker 130 is mounted on a suitably stable support that can be placed near the rotor blade tip end in such a way that it can "see" the active target 131 at all times. The laser tracker 130 emits a laser beam B in the direction of the active target 131 and receives the reflected laser beam, from which it can compute the XYZ position of the active target 131. The laser tracker 130 sends XYZ position information 13_XYZ to the control unit (not shown). The active target 131 is equipped with a sensor assembly so that it can determine its RxRyRz orientation, and sends the RxRyRz position information 13_RxRyRz to the control unit (the skilled person will be familiar with the types of sensor assemblies that can be used for this purpose). On the basis of this data, the control unit can track the movements of the imaging assembly 11 and can compute a next position for the imaging assembly 11, and can generate control signals for any actuators in order to move the imaging assembly 11 to the next position. Although the present invention has been disclosed in the form of preferred embodiments and variations thereon, it will be understood that numerous additional modifications and variations could be made thereto without departing from the scope of the invention. For example, a robot with at least three degrees of freedom could be used instead of one with six degrees of freedom. The remaining degrees of freedom would then be covered by the moveable base frame, but with greater requirements on the precision of its movement as a consequence. In a laser-based positioning system, multiple active targets might be implemented if the geometry of the inspected object is too complex to keep the aperture of a single active target aligned with the laser tracker throughout the inspection process.

In addition to visually inspecting an object, it would be possible to perform non-destructive testing by arranging a suitable probe on the end effector of the robot assembly. For example, an ultrasound probe could be included as part of the imaging assembly in order to detect subsurface faults such as delaminations.

For the sake of clarity, it is to be understood that the use of "a" or "an" throughout this application does not exclude a plurality, and "comprising" does not exclude other steps or elements.

**Claims**

1. A visual inspection arrangement (1) comprising

   - a robot assembly (10) realised to move in an unconstrained manner relative to an object (2) being subject to visual inspection, which robot assembly (10) comprises a robot arm (100) with an end effector (101) realised to direct an imaging assembly (11) at the object (2) ;
   - a drive arrangement (12) realised to effect a displacement of the robot assembly (10);
   - a positioning system (13) configured to track the position (13_XYZ, 13_RxRyRz) of the imaging assembly (11) relative to the object (2); and
   - a control unit (14) configured to control the drive arrangement (12) on the basis of the tracked position of the imaging assembly (11).

2. A visual inspection arrangement according to claim 1, wherein the robot assembly (10) comprises a mobile base frame (102) realised to support the robot arm (10) and to move in an unconstrained manner relative to the object (2) undergoing visual inspection.

3. A visual inspection arrangement according to claim 1 or claim 2, wherein the positioning system (13) is a laser-based positioning system.

4. A visual inspection arrangement according to claim 3, wherein the positioning system (13) comprises a stationary laser tracker (130) arranged in the vicinity of the object (2), and an active retro-reflective target (131) carried by the end effector (101).

5. A visual inspection arrangement according to claim 4, wherein the laser tracker (130) is configured to generate position data (13_XYZ) describing the XYZ position of the imaging assembly (11) in a local reference frame, and the active target (131) is configured to generate position data (13_RxRyRz) describing the RxRyRz position of the imaging assembly (11) in the local reference frame.

6. A visual inspection arrangement according to any of the preceding claims, realised such that the end-effector (101) of the robot arm (100) has six degrees of freedom and wherein the positioning system (13) is realised to track the motion of the imaging assembly (11) accordingly.

7. A visual inspection arrangement according to any of the preceding claims, wherein the mobile base frame (102) is equipped with two wheel pairs (12W1, 12W2), and wherein the drive arrangement (12) comprises a motor arranged to drive a wheel pair (12W1).

8. A visual inspection arrangement according to any of the preceding claims, comprising a vertical support (103) mounted on the mobile base frame (102), and wherein the robot arm (100) is secured to a platform (103P) carried by the vertical support (103).

9. A visual inspection arrangement according to any of the preceding claims, wherein the drive arrangement (12) comprises a vertical displacement means (1030) realised to effect a vertical displacement of the platform (103P).

10. A visual inspection arrangement according to any of the preceding claims, wherein the mobile base frame (102) comprises an aperture (102A) dimensioned to allow the robot arm (10) to extend to floor level.

11. A visual inspection arrangement according to any of the preceding claims, wherein the imaging assembly (11) comprises an area-sampling 3D scanner realised as any of: a moving laser scanner, a time-of-flight scanner, a structured light scanner.

12. A method of performing a visual inspection of an object (2) using a visual inspection arrangement (1) according to any of claims 1 to 11, comprising the steps of

S0) moving the robot assembly (10) to an initial working position and activating the positioning system (13);
S1) scanning the surface portion (S) of the object (2) accessible from within the work envelope of the robot assembly (10) at its working position;
S2) computing the next working position for the robot assembly (10) on the basis of position data (13D) provided by the positioning system (13);
S3) effecting a displacement of the robot assembly (10) to that next working position; and

repeating steps S1 to S3 to scan the area of interest of the object (2).

13. A method according to claim 12, wherein step S1 comprises the steps of

S1.1) positioning the imaging assembly (11) in a scan position and directing the imaging assembly (11) at the surface of the object (2);
S1.2) acquiring image data (11_D) for that scan position;
S1.3) computing the next scan position for the imaging assembly (11) on the basis of position data (13_D) provided by the positioning system (13);
S1.4) effecting a displacement of the imaging assembly (11) to that next scan position; and

repeating steps S1.1 to S1.4 to scan the surface portion (S) of the object (2) accessible from within the work envelope of the robot assembly (10) at that working position.

14. A method according to claim 12 or claim 13, wherein image data (11 D) acquired in the scan positions are combined in an image stitching step to obtain an image model ($M_{real}$) of the entire object (2).

15. A computer program product comprising a computer program that is directly loadable into a memory of the control unit of a visual inspection arrangement (1) and which comprises program elements for performing steps of the method according to any of claims 11 to 14 when the computer program is executed by the control unit (14) of the visual inspection arrangement (1).

FIG 1

FIG 2

# FIG 3

FIG 4

## FIG 5

## FIG 6

13_RxRyRz, 13_XYZ

15

11_D

$M_{real}$

$M_{plan}$

16

160

## FIG 7

12

$P_{next}$

120

100A

101A

102A

103A

FIG 8

110 111 110

11

104

131

B

130

13_RxRyRz

13_XYZ

13

Europäisches
Patentamt

European
Patent Office

Office européen
des brevets

# EUROPEAN SEARCH REPORT

Application Number

EP 18 17 1466

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/276472 A1 (BECKER BERND-DIETMAR [DE] ET AL) 28 September 2017 (2017-09-28) | 1-15 | INV. G01B11/25 |
| Y | * abstract; figures 1A-6B,12A-12B,17C * * paragraphs [0005], [0068] - [0077], [0085] - [0088], [0091], [0099], [0104] - [0114], [0150] - [0155], [0173], [0209]; claim 1 * * paragraphs [0337], [0369], [0469] * ----- | 14 | ADD. G01B11/00 |
| Y | DE 10 2016 206982 A1 (SIEMENS AG [DE]) 26 October 2017 (2017-10-26) * paragraph [0013] * ----- | 14 | |

TECHNICAL FIELDS
SEARCHED      (IPC)

G01B

The present search report has been drawn up for all claims

| Place of search | Date of completion of the search | Examiner |
|---|---|---|
| Munich | 19 July 2018 | Marani, Roberta |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................

& : member of the same patent family, corresponding
document

EPO FORM 1503 03.82 (P04C01)

**EP 3 567 340 A1**

**ANNEX TO THE EUROPEAN SEARCH REPORT
ON EUROPEAN PATENT APPLICATION NO.**

EP 18 17 1466

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2018

| Patent document cited in search report | Publication date | Patent family member(s) | Publication date |
|---|---|---|---|
| US 2017276472 A1 | 28-09-2017 | DE 112016002057 T5 | 25-01-2018 |
| | | GB 2555027 A | 18-04-2018 |
| | | JP 2018515774 A | 14-06-2018 |
| | | US 2016327383 A1 | 10-11-2016 |
| | | US 2017276472 A1 | 28-09-2017 |
| | | WO 2016179448 A1 | 10-11-2016 |
| DE 102016206982 A1 | 26-10-2017 | DE 102016206982 A1 | 26-10-2017 |
| | | WO 2017186515 A1 | 02-11-2017 |

EPO FORM P0459

For more details about this annex : see Official Journal of the European Patent Office, No. 12/82

19